# EUROPEAN PATENT APPLICATION

(11) **EP 1 063 014 A2**
(43) Date of publication of application: **27.12.2000**
(21) Application number: 00304609.1
(22) Date of filing: 30.05.2000
(51) Int. Cl.: B01J 29/72, C10G 45/64

(54) **Dewaxing process using a catalyst containing zeolite SSZ-32**

(30) Priority: 23.06.1999 US 338721
(71) Applicant: CHEVRON U.S.A. INC., San Ramon, CA 94583-4289 (US)
(72) Inventor: Krug, Russel R., Novato, California 94949 (US); Zones, Stacey I., San Francisco, California 94122 (US); Mercantonio, Paul J., San Rafael, California 94903 (US); Kibby, Charles Leonard, Benicia, California 94510 (US); Provance, Ross Lee, Richmond, California 94801 (US); Lopez, Jaime, Benicia, California 94510 (US); Kennedy, James V., Greenbrae, California 94904 (US); Winslow, Phillip, Hercules, California 94547 (US)
(74) Representative: Nash, David Allan

(57) **Abstract**

A dewaxing process for reducing the cloud point of a hydrocarbon oil feed wherein the hydrocarbon oil feed is contacted with a SSZ-32 zeolitic catalyst under dewaxing conditions to produce a dewaxed product. The zeolitic catalyst has a SSZ-32 zeolite having a mole ratio of silicon oxide to aluminum oxide of from 20:1 to 35:1 and from 0.1 % to 0.2% of a palladium/platinum mixture having a palladium to platinum molar ratio of from 1:4 to 4:1. After the palladium/platinum mixture is incorporated into the zeolitic catalyst, it is thermally treated at a temperature at least 370° C. The dewaxing conditions include a temperature of from 340° C to 400° C, a pressure of from 200 psig to 3000 psig, a liquid hourly space velocity of from 0.4 hr⁻¹ to 2 hr⁻¹, and a hydrogen recycle rate from 500 SCFB to 10,000 SCFB.

## Description

The present invention relates to a zeolitic catalyst and a dewaxing process using that catalyst for reducing the cloud point of a hydrocarbon oil feed.

### BACKGROUND OF THE INVENTION

Natural and synthetic zeolitic crystalline aluminosilicates are useful as catalysts and adsorbents. These aluminosilicates have distinct crystal structures, which are demonstrated by X-ray diffraction. The crystal structure defines cavities and pores which are characteristic of the different species. The adsorptive and catalytic properties of each crystalline aluminosilicate are determined in part by the dimensions of its pores and cavities. Thus, the utility of a particular zeolite in a particular application depends at least partly on its crystal structure.

Because of their unique molecular sieving characteristics, as well as their catalytic properties, crystalline aluminosilicates are especially useful in such applications as gas drying and separation and hydrocarbon conversion. Although many different crystalline aluminosilicates and silicates have been disclosed, there is a continuing need for new zeolites and silicates with desirable properties for gas separation and drying, hydrocarbon and chemical conversions, and other applications.

Crystalline aluminosilicates are usually prepared from aqueous reaction mixtures containing alkali or alkaline earth metal oxides, silica, and alumina. "Nitrogenous zeolites" have been prepared from reaction mixtures containing an organic templating agent, usually a nitrogen-containing organic cation. By varying the synthesis conditions and the composition of the reaction mixture, different zeolites can be formed using the same templating agent. Use of N,N,N-trimethyl cyclopentylammonium iodide in the preparation of Zeolite SSZ-15 molecular sieve is disclosed in U.S. Pat. No. 4,610,854; use of 1-azoniaspiro [4.4] nonyl bromide and N,N,N-trimethyl neopentylammonium iodide in the preparation of a molecular sieve termed "Losod" is disclosed in *Helv. Chim. Acta* (1974), Vol. 57, page 1533 (W. Sieber and W. M. Meier); use of quinuclidinium compounds to prepare a zeolite termed "NU-3" is disclosed in European Patent Publication No. 40016; use of 1,4-di(1-azoniabicyclo [2.2.2.]octane) lower alkyl compounds in the preparation of Zeolite SSZ-16 molecular sieve is disclosed in U.S. Pat. No. 4,508,837; use of N,N,N-trialkyl-1-adamantamine in the preparation of zeolite SSZ-13 molecular sieve is disclosed in U.S. Pat. No. 4,544,538. The preparation of crystalline aluminosilicates using an imidazole template is disclosed in U.S. Pat. No. 4,483,835.

The preparation of crystalline zeolite SSZ-32 using an N-lower alkyl-N-isopropyl-imidazolium cation as a template is disclosed in U.S. Pat. No. 5,053,373. U.S. Pat. No. 5,300,210 discloses a hydrocarbon conversion process using a Zeolite SSZ-32 as a catalyst, wherein the mole ratio of silicon oxide to aluminum oxide in the zeolite is in the range of 20 to less than 40. All of the examples of U.S. Pat. No. 5,300,210 have a silicon oxide to aluminum oxide molar ratio of at least 32:1. U.S. Patents 5,053,373 and 5,300,210 are hereby incorporated by reference in their entirety for all purposes.

### SUMMARY OF THE INVENTION

The present invention provides a catalyst containing SSZ-32 zeolite useful in a dewaxing process for reducing the cloud point of a hydrocarbon oil feed, and a dewaxing process using that catalyst.

We have discovered that we can significantly improve the reduction of cloud point of a dewaxing process using a catalyst containing a SSZ-32 zeolite if three critical factors are controlled: the calicination temperature of the impregnated catalyst, the silica to alumina molar ratio, and the Group VIII metal loading level.

In its broadest scope, the zeolitic catalyst comprises a SSZ-32 zeolite (as defined by the X-ray diffraction lines of Table 1 shown below). The SSZ-32 zeolite has a mole ratio of silicon oxide to aluminum oxide of from 20:1 to 35:1. That catalyst contains from 0.05% to 0.325% of at least one Group VIII metal. The zeolitic catalyst is thermally treated at a temperature at least 288° C after the Group VIII metal has been incorporated into the catalyst, but prior to its use as a dewaxing catalyst. At least one of these conditions has to be modified to obtain good cloud control. Either the silicon oxide to aluminum oxide molar ratio should be from 20:1 to 32:1, or the catalyst should contain from 0.10% to 0.20% of at least one Group VIII metal, or the thermal treatment should be at a temperature of at least 352° C, or a combination of these conditions.

Preferably, the SSZ-32 zeolite has a mole ratio of silicon oxide to aluminum oxide of from 20:1 to 32:1, more preferably from 25:1 to 28:1.

Preferably, the zeolitic catalyst comprises from 0.10% to 0.20% (most preferably from 0.15% to 0.17%) of at least one Group VIII metal. Preferably, the Group VIII metals are palladium and platinum, most preferably having a palladium to platinum molar ratio of from 1:4 to 4:1.

Preferably, the zeolitic catalyst is thermally treated at a temperature at least 352° C, most preferably at least 370° C.

The zeolitic catalyst is useful in a dewaxing process for reducing the cloud point of a hydrocarbon oil feed. In that process, a hydrocarbon oil feed is contacted with the zeolitic catalyst under dewaxing conditions to produce a dewaxed product. Preferably, the dewaxing conditions include a temperature of from 200° C to 475° C, a pressure of from 15 psig to 3,000 psig, a liquid hourly space velocity of from 0.1 hr⁻¹ to 20 hr⁻¹, and a hydrogen recycle rate from 500 SCFB to 10,000 SCFB. More preferably, the dewaxing conditions include a temperature of from 250° C to 450° C, a pressure of from 150 psig to 3,000 psig, a liquid hourly space velocity of from 0.2 hr⁻¹ to 10 hr⁻¹, and a hydrogen recycle rate from 3,000 SCFB to 10,000 SCFB. Most preferably, the dewaxing conditions include a temperature of from 340° C to 400° C, a pressure of from 200 psig to 3,000 psig, and a liquid hourly space velocity of from 0.4 hr⁻¹ to 2 hr⁻¹, and a hydrogen recycle rate from 5,000 SCFB to 10,000 SCFB.

### DETAILED DESCRIPTION OF THE INVENTION

In its broadest aspect, the present invention involves a zeolitic catalyst and a dewaxing process using that catalyst for reducing the cloud point of a hydrocarbon oil feed.

### SSZ-32 ZEOLITES

SSZ-32 zeolites, as synthesized, have a crystalline structure whose X-ray powder diffraction pattern shows the characteristic lines shown in Table 1, below.

**TABLE I**

| d/n (±0.1) | Int.I/Iₒ |
|---|---|
| 11.05 | 26 |
| 10.03 | 10 |
| 7.83 | 17 |
| 4.545 | 71 |
| 4.277 | 71 |
| 3.915 | 100 |
| 3.726 | 98 |

The X-ray powder diffraction patterns were determined by standard techniques. The radiation was the K-alpha/doublet of copper, and a scintillation counter spectrometer with a strip-chart pen recorder was used. The peak heights I and the positions, as a function of 2 θ where θ is the Bragg angle, were read from the spectrometer chart. From these measured values, the relative intensities, 100I/Iₒ where Iₒ is the intensity of the strongest line or peak, and d, the interplanar spacing in Angstroms corresponding to the recorded lines, can be calculated. The X-ray diffraction pattern of Table I is characteristic of SSZ-32 zeolites. The zeolite produced by exchanging the metal or other cations present in the zeolite with various other cations yields substantially the same diffraction pattern although there can be minor shifts in interplanar spacing and minor variations in relative intensity. Minor variations in the diffraction pattern can also result from variations in the organic compound used in the preparation and from variations in the silica-to-alumina mole ratio from sample to sample. Calcination can also cause minor shifts in the X-ray diffraction pattern. Notwithstanding these minor perturbations, the basic crystal lattice structure remains unchanged.

SSZ-32 zeolites can be suitably prepared from an aqueous solution containing sources of an alkali metal oxide, N-lower alkyl-N'-isopropyl-imidazolium cation and preferably N,N'-diisopropyl-imidazolium cation or N-methyl-N'-isopropyl-imidazolium cation, an oxide of aluminum, and preferably wherein the aluminum oxide source provides aluminum oxide which is in a covalently dispersed form on silica, and an oxide of silicon.

The reaction mixture is prepared using standard zeolitic preparation techniques. Typical sources of aluminum oxide for the reaction mixture include aluminates, alumina, and aluminum compounds, such as aluminum-coated silica colloids, and other zeolites.

Typical sources of silicon oxide include silicates, silica hydrogel, silicic acid, colloidal silica, fumed silicas, tetraalkyl orthosilicates, and silica hydroxides.

Salts, particularly alkali metal halides such as sodium chloride, can be added to or formed in the reaction mixture. They are disclosed in the literature as aiding the crystallization of zeolites while preventing silica occlusion in the lattice.

One of the critical factors in obtaining good Cloud Point control is the silicon oxide to aluminum oxide molar ratio (also called the silica to alumina molar ratio) of the zeolite used in the catalyst. If the Group VIII metal loading is above 0.2% and the calcination temperature is less than 352° C, the silicon oxide to aluminum oxide molar ratio must be no more than 32:1, preferably from 25:1 to 28:1.

The reaction mixture is maintained at an elevated temperature until the crystals of the zeolite are formed. The temperatures during the hydrothermal crystallization step are typically maintained from 140° C to 200° C, preferably from 160° C to 180° C, most preferably from 170° C to 180° C. The crystallization period is typically greater than one day and preferably from about five days to about ten days.

The hydrothermal crystallization is conducted under pressure and is usually in an autoclave so that the reaction mixture is subject to autogenous pressure. The reaction mixture can be stirred during crystallization.

Once the zeolite crystals have formed, the solid product is separated from the reaction mixture by standard mechanical separation techniques such as filtration. The crystals are water-washed and then dried, e.g., at 90° C to 150° C for from 8 to 24 hours, to obtain the as synthesized, zeolite crystals. The drying step can be performed at atmospheric or subatmospheric pressures.

During the hydrothermal crystallization step, the crystals can be allowed to nucleate spontaneously from the reaction mixture The reaction mixture can also be seeded with SSZ-32 or ZSM-23 crystals both to direct, and accelerate the crystallization, as well as to minimize the formation of undesired aluminosilicate contaminants. If the reaction mixture is seeded with crystals, the concentration of the organic compound can be reduced, but it is preferred to have some organic compound present, e.g., an alcohol.

### ZEOLITIC CATALYST CONTAINING A SSZ-32 ZEOLITE

The zeolite is used in intimate combination with a Group VIII metal, such as palladium and/or platinum. These components can be exchanged into the zeolite. The zeolite can also be impregnated with the metals, or, the metals can be physically intimately admixed with the zeolite using standard methods known to the art. And, the metals can be occluded in the crystal lattice by having the desired metals present as ions in the reaction mixture from which the SSZ-32 zeolite is prepared.

Another of the critical factors in obtaining good Cloud Point control is the loading level of the Group VIII metal in the catalyst. The loading should be less than 0.325 weight percent of the catalyst. (Unless otherwise specified, all percentages are in weight percent.) If the silicon oxide to aluminum oxide molar ratio is greater than 32:1 and the calcination temperature is less than 352° C, the zeolitic catalyst should have from 0.10% to 0.20% Group VIII metal, preferably from 0.15% to 0.17% Group VIII metal. Preferably, the Group VIII metals are a mixture of palladium and platinum because that mixture is less vulnerable to sulfur poisoning than other metals. Preferably the palladium to platinum molar ratio of from 1:4 to 4:1.

The third the critical factor in obtaining good Cloud Point control is the calcination conditions for the zeolitic catalyst. Following incorporation of the Group VIII metal, but before its use as a dewaxing catalyst, the zeolitic catalyst is thermally treated in air or inert gas at a temperature of at least 288° C for periods of time ranging from 1 to 48 hours, or more, to produce a catalytically active product especially useful in hydrocarbon conversion processes. If the silicon oxide to aluminum oxide molar ratio is greater than 32:1 and the Group VIII metal loading is above 0.2%, the thermal treatment should occur at a temperature of at least 352° C, preferably at least 370° C.

The aluminosilicate can be formed into a wide variety of physical shapes. Generally speaking, the zeolite can be in the form of a powder, a granule, or a molded product, such as extrudate having particle size sufficient to pass through a 2.5-mesh (Tyler) screen and be retained on a 48-mesh (Tyler) screen. In cases where the catalyst is molded, such as by extrusion with an organic binder, the aluminosilicate can be extruded before drying, or, dried or partially dried and then extruded. The zeolite can be composited with other materials resistant to the temperatures and other conditions employed in organic conversion processes. Such matrix materials include active and inactive materials and synthetic or naturally occurring zeolites as well as inorganic materials such as clays, silica and metal oxides. The latter may occur naturally or may be in the form of gelatinous precipitates, sols, or gels, including mixtures of silica and metal oxides. Use of an active material in conjunction with the synthetic zeolite (i.e., combined with it) tends to improve the conversion and selectivity of the catalyst in certain organic conversion processes. Inactive materials can suitably serve as diluents to control the amount of conversion in a given process so that products can be obtained economically without using other means for controlling the rate of reaction. Frequently, zeolite materials have been incorporated into naturally occurring clays, e.g., bentonite and kaolin. These materials, i.e., clays, oxides, etc., function, in part, as binders for the catalyst. It is desirable to provide a catalyst having good crush strength, because in petroleum refining the catalyst is often subjected to rough handling. This tends to break the catalyst down into powders which cause problems in processing.

Naturally occurring clays which can be composited with the synthetic zeolites of this invention include the montmorillonite and kaolin families, which families include the sub-bentonites and the kaolins commonly known as Dixie, McNamee, Georgia, and Florida clays or others in which the main mineral constituent is halloysite, kaolinite, dickite, nacrite, or anauxite. Fibrous clays such as sepiolite and attapulgite can also be used as supports. Such clays can be used in the raw state as originally mined or can be initially subjected to calcination, acid treatment, or chemical modification.

In addition to the foregoing materials, the SSZ-32 zeolites can be composited with porous matrix materials and mixtures of matrix materials such as silica, alumina, titania, magnesia, silica-alumina, silica-magnesia, silica-zirconia, silica-thoria, silica-beryllia, silica-titania, titania-zirconia, as well as ternary compositions such as silica-alumina-thoria, silica-alumina-zirconia, silica alumina-magnesia and silica-magnesia-zirconia. The matrix can be in the form of a cogel.

The SSZ-32 zeolites can also be composited with other zeolites such as synthetic and natural faujasites (e.g., X and Y), erionites, and mordenites. They can also be composited with purely synthetic zeolites, such as those of the ZSM series. The combination of zeolites can also be composited in a porous inorganic matrix.

### THE DEWAXING PROCESS

The present zeolitic catalyst is used in a dewaxing process for reducing the cloud point of a hydrocarbon oil feed. Hydrocarbonaceous feedstocks contain carbon compounds and can be from many different sources, such as virgin petroleum fractions, recycle petroleum fractions, shale oil, liquefied coal, tar sand oil, etc., and, in general, can be any hydrocarbon-containing fluid susceptible to zeolitic catalytic reactions. Depending on the type of processing the hydrocarbonaceous feed is to undergo, the feed can contain metal or be free of metals, it can also have high or low nitrogen or sulfur impurities. It can be appreciated, however, that in general processing will be more efficient (and the catalyst more active) the lower the metal, nitrogen, and sulfur content of the feedstock.

The conversion of hydrocarbonaceous feeds can take place in any convenient mode, for example, in fluidized bed, moving bed, or fixed bed reactors depending on the types of process desired.

The catalytic dewaxing conditions are dependent in large measure on the feed used and upon the desired pour point. Generally, the temperature will be from 200° C to 475° C, preferably from 250° C to 450° C, more preferably between 340° C to 400° C. The pressure is typically from 15 psig to 3,000 psig, preferably from 150 psig to 3,000 psig, more preferably from 200 psig to 3,000 psig. The liquid hourly space velocity (LHSV) preferably will be from 0.1 hr⁻¹ to 20 hr⁻¹, more preferably from 0.2 hr⁻¹ to 10 hr⁻¹, most preferably from 0.4 hr⁻¹ to 2 hr⁻¹.

Hydrogen is preferably present in the reaction zone during the catalytic dewaxing process. The hydrogen to feed ratio is typically between 500 and 10,000 SCFB (standard cubic feet per barrel), preferably 3,000 to 10,000 SCFB, more preferably 5,000 to 10,000 SCFB. Generally, hydrogen will be separated from the product and recycled to the reaction zone. Typical feedstocks include light gas oil, heavy gas oils, and reduced crudes boiling about 350° F.

### EXAMPLES

The invention will be further illustrated by following examples, which set forth particularly advantageous method embodiments. While the Examples are provided to illustrate the present invention, they are not intended to limit it.

### TEST PROCEDURES

In the following examples, a zeolitic catalyst was prepared and used in the first stage of a two-stage dewaxing process. In the first stage of this process, fresh feed (a waxy gas oil boiling between 700° and 1150° F as measured by D2887 or D1160, having a pour point of about 55° C) and recycle gas entered the first reactor (containing the zeolitic catalyst) and were treated at a pressure of from 2,300 to 2,505 psig, a reaction temperature of from 560° to 680° F, a hydrogen flow rate of from 2480 to 4784 SCFB, and a LHSV of from 0.8.to 2.5 hr⁻¹. In the second stage of this process, the reaction product of the first stage was feed into a second reactor containing 0.1%Pd/0.2%Pt on alumina, and was treated at a pressure the same as the first reactor, a reaction temperature of 450° F (232° C), and a LHSV of from 0.8 to 3.0 hr⁻¹. The pour point (ASTM D5950) and cloud point (ASTM D5773) were measured in the final product.

In all the examples (comparative and examples of the present invention,) the zeolitic catalyst comprised 65% (on a dry weight basis) of SSZ-32 zeolite, from 0.160% to 0.325% of platinum, and the remainder was pseudo-boehmite alumina.

### COMPARATIVE EXAMPLE A

A zeolitic catalyst was prepared from a SSZ-32 zeolite having a metal loading of 0.325% platinum, and having a silica to alumina molar ratio of 35:1. Following incorporation of the platinum, but before its use as a dewaxing catalyst, the zeolitic catalyst was calcined at a temperature of 550° F (288° C).

That catalyst was then used in the two-stage dewaxing process described above. In the first reactor, the pressure was 2,505 psig, the reaction temperature was 680° F (360° C), the hydrogen flow rate was 2605 SCFB, and the LHSV was 1.6 hr⁻¹. In the second reactor, the LHSV was 1.6 hr⁻¹. The pour point was -11° C and the cloud point was -4° C.

### COMPARATIVE EXAMPLE B

The same catalyst as Comparative Example A was used in a two-stage dewaxing process having a lower reaction temperature and about half the LHSV, but a slightly higher hydrogen flow rate. In the first reactor, the pressure was 2,492 psig, the reaction temperature was 645° F (341° C), the hydrogen flow rate was 3,043 SCFB, and the LHSV was 0.81 hr⁻¹. In the second reactor the LHSV was 0.81 hr⁻¹. The pour point was -14° C and the cloud point was -5° C. This shows that above variations in pressure, temperature, hydrogen flow rate, and LHSV do not cause major changes in pour point or cloud point.

### EXAMPLE 1

### THE EFFECT OF SILICA:ALUMINA MOLAR RATIO ON CLOUD CONTROL

A zeolitic catalyst was prepared similar to that of the Comparative Examples except that the silica to alumina molar ratio was 28:1.

That catalyst was then used in the two-stage dewaxing process described above. In the first reactor, the pressure was 2,499 psig, the reaction temperature was 645° F (341° C), the hydrogen flow rate was 2,999 SCFB, and the LHSV was 0.8 hr⁻¹. In the second reactor, the LHSV was 0.8 hr⁻¹. The pour point was -19° C and the cloud point was -12° C. Thus, reducing the silica to alumina molar ratio from 35:1 to 28:1 caused a 7° C reduction in cloud point.

### EXAMPLE 2

### THE EFFECT OF METAL LOADING ON CLOUD CONTROL

A zeolitic catalyst was prepared similar to that of the Comparative Examples except that the zeolite had a metal loading of 0.160% platinum.

That catalyst was then used in the two-stage dewaxing process described above. In the first reactor, the pressure was 2,505 psig, the reaction temperature was 650° F (343° C), the hydrogen flow rate was 2,850 SCFB, and the LHSV was 0.84 hr⁻¹. In the second reactor, the LHSV was 0.84 hr⁻¹. The pour point was -22° C and the cloud point was -10° C. Thus, reducing the metal loading of the catalyst by half caused a 5° C reduction in cloud point.

### EXAMPLES 3 AND 4

### THE EFFECT OF CALCINATION TEMPERATURE ON CLOUD CONTROL

A zeolitic catalyst was prepared similar to that of the Comparative Examples except that the calcination temperature was raised to 700° F (371° C).

In Example 3, that catalyst was then used in the two-stage dewaxing process described above. In the first reactor, the pressure was 2,498 psig, the reaction temperature was 580° F (304° C), the hydrogen flow rate was 2,506 SCFB, and the LHSV was 0.8 hr⁻¹. In the second reactor, the LHSV was 0.8 hr⁻¹. The pour point was -16.4° C and the cloud point was -9° C.

In Example 4, that catalyst was then used in the two-stage dewaxing process described above. In the first reactor, the pressure was 2,496 psig, the reaction temperature was 616° F (325° C), the hydrogen flow rate was 2,486 SCFB, and the LHSV was 0.81 hr⁻¹. In the second reactor, the LHSV was 0.9 hr⁻¹. The pour point was -24° C and the cloud point was -12° C.

Thus, raising the calcination temperature to 700°F caused a 4° to 7° C reduction in cloud point.

### EXAMPLE 5

### THE EFFECT OF CALCINATION TEMPERATURE AND LHSV ON CLOUD CONTROL

A zeolitic catalyst was prepared similar to that of the Comparative Examples except that the calcination temperature was raised to 700° F (371° C).

That catalyst was then used in the two-stage dewaxing process described above, wherein the recycle hydrogen rate was almost doubled by reducing the LHSV. In the first reactor, the pressure was 2,497 psig, the reaction temperature was 650° F (343° C), the hydrogen flow rate was 4,784 SCFB, and the LHSV was 0.42 hr⁻¹. In the second reactor, the LHSV was 0.47 hr⁻¹. The pour point was -34° C and the cloud point was -23° C. Thus, raising the calcination temperature to 700°F and increasing the recycle gas rate by drastically reducing the LHSV caused a 11° C reduction in cloud point over only raising the calcination temperature to 700°F without reducing the LHSV.

### EXAMPLES 6 AND 7

### THE EFFECTS OF MORE THAN ONE VARIABLE ON CLOUD CONTROL

In Example 6, a zeolitic catalyst was prepared similar to the Comparative Examples except that the silica to alumina molar ratio was lowered from 35:1 to 28:1 and the zeolitic catalyst had a metal loading of 0.160% platinum. That catalyst was then used in the two-stage dewaxing process described above. In the first reactor, the pressure was 2,501 psig, the reaction temperature was 645° F (341° C), the hydrogen flow rate was 2,942 SCFB, and the LHSV was 0.81 hr⁻¹. In the second reactor, the LHSV was 0.81 hr⁻¹. The pour point was -24° C and the cloud point was -11° C.

In Example 7, a zeolitic catalyst was prepared similar to the Comparative Examples except that the silica to alumina molar ratio lowered from 35:1 to 32:1 and the calcination temperature was raised to 665° F (352° C). That catalyst was then used in the two-stage dewaxing process described above. In the first reactor, the pressure was 2,495 psig, the reaction temperature was 560° F (293° C), the hydrogen flow rate was 2,480 SCFB, and the LHSV was 0.85 hr⁻¹. In the second reactor, the LHSV was 0.93 hr⁻¹. The pour point was -27° C and the cloud point was -15° C.

### EXAMPLE 8

In Example 8, a zeolitic catalyst was prepared similar to the Comparative Examples except that the silica to alumina molar ratio was lowered from 35:1 to 32:1 and the calcination temperature was maintained at between 550° and 600° F (288° and 315° C). That catalyst was then used in the two-stage dewaxing process described above. In the first reactor, the pressure was 2,501 psig, the reaction temperature was 620° F (327° C), the hydrogen flow rate was 3,013 SCFB, and the LHSV was 0.9 hr⁻¹. In the second reactor, the LHSV was 0.81 hr⁻¹. The pour point was -19° C and the cloud point was -10° C.

### COMPARATIVE EXAMPLE C AND EXAMPLE 9

The same catalyst as Comparative Example A was used in a two-stage dewaxing process having a higher LHSV, but a slightly lower pressure. In the first reactor, the pressure was 2,300 psig, the reaction temperature was 707° F (377° C), the hydrogen flow rate was 3,263 SCFB, and the LHSV was 2.27 hr⁻¹. In the second reactor the LHSV was 2.27 hr⁻¹. The pour point was -12° C and the cloud point was -0° C. This shows that above variations in pressure, temperature, hydrogen flow rate, and LHSV do not cause major changes in pour point or cloud point.

In Example 9, a zeolitic catalyst was prepared similar to the Comparative Examples except that the calcination temperature was raised to 665° F (352° C). That catalyst was then used in the two-stage dewaxing process described above. In the first reactor, the pressure was 2,300 psig, the reaction temperature was 707° F (377° C), the hydrogen flow rate was 2760 SCFB, and the LHSV was 2.44 hr⁻¹. In the second reactor, the LHSV was 2.75 hr⁻¹. The pour point was -16° C and the cloud point was -8° C. Thus, raising the calcination temperature to 665°F caused a 8° C reduction in cloud point, as compared to Comparative Example C.

**TABLE II**

| Example | A | B | C | 1 | 2 | 3 | 4 | 5 | 6 | 7 | 8 | 9 |
|---|---|---|---|---|---|---|---|---|---|---|---|---|
| SiO2:Al2O3 | 35 | 35 | 35 | 26 | 35 | 35 | 35 | 35 | 28 | 32 | 32 | 35 |
| Calcination (°C) | 288 | 288 | 288 | 288 | 288 | 371 | 371 | 371 | 288 | 352 | 288-315 | 352 |
| Metal Loading | 0.325 | 0.325 | 0.325 | 0.325 | 0.160 | 0.325 | 0.325 | 0.325 | 0.160 | 0.325 | 0.325 | 0.325 |
| Pressure | 2505 | 2492 | 2300 | 2499 | 2505 | 2498 | 2496 | 2497 | 2501 | 2495 | 2501 | 2300 |
| Temperature (°C) | 360 | 341 | 377 | 341 | 343 | 304 | 325 | 343 | 341 | 293 | 327 | 377 |
| Hydrogen | 2605 | 3043 | 3263 | 2999 | 2850 | 2506 | 2486 | 4784 | 2942 | 2480 | 3013 | 2760 |
| LHSV (1^{st}) | 1.6 | 0.81 | 2.27 | 0.8 | 0.84 | 0.8 | 0.81 | 0.42 | 0.81 | 0.85 | 0.90 | 2.44 |
| LHSV (2^{nd}) | 1.6 | 0.81 | 2.27 | 0.8 | 0.84 | 0.89 | 0.9 | 0.47 | 0.81 | 0.93 | 0.81 | 2.75 |
| Pour Point | -11 | -14 | -12 | -19 | -22 | -16.4 | -24 | -34 | -24 | -27 | -19 | -16 |
| Cloud Point | -4 | -5 | -0 | -12 | -10 | -9 | -12 | -23 | -11 | -15 | -10 | -8 |

While the present invention has been described with reference to specific embodiments, this application is intended to cover those various changes and substitutions that may be made by those skilled in the art without departing from the spirit and scope of the appended claims.

## Claims

1. A zeolite catalyst comprising a zeolite having the X-ray diffraction lines of Table I and either:
(1) a mole ratio of silicon oxide to aluminum oxide of from 20:1 to 32:1, from 0.05% to 0.325% of at least one Group VIII metal, wherein said zeolite has been thermally treated at a temperature of at least 288°C; or
(2) a mole ratio of silicon oxide to aluminum oxide of from 20:1 to 35:1, from 0.1% to 0.20% of at least one Group VIII metal, wherein said zeolite has been thermally treated at a temperature of at least 288°C; or
(3) a mole ratio of silicon oxide to aluminum oxide of from 20:1 to 35:1, from 0.05% to 0.325% of at least one Group VIII metal, wherein said zeolite has been thermally treated at a temperature of at least 352°C; or
(4) a mole ratio of silicon oxide to aluminum oxide of from 20:1 to 35:1, from 0.10% to 0.20% of at least one Group VIII metal, wherein said zeolite has been thermally treated at a temperature of at least 352°C.

2. A zeolitic catalyst according to claim 1 wherein the zeolite has a mole ratio of silicon oxide to aluminum oxide of from 20:1 to 32:1, from 0.05% to 0.325% of at least one Group VIII metal, wherein said zeolite has been thermally treated at a temperature of at least 288°C.

3. A zeolitic catalyst according to claim 1 wherein the zeolite has a mole ratio of silicon oxide to aluminum oxide of from 20:1 to 35:1, from 0.1% to 0.20% of at least one Group VIII metal, wherein said zeolite has been thermally treated at a temperature of at least 288°C.

4. A zeolitic catalyst according to claim 1 wherein the zeolite has a mole ratio of silicon oxide to aluminum oxide of from 20:1 to 35:1, from 0.05% to 0.325% of at least one Group VIII metal, wherein said zeolite has been thermally treated at a temperature of at least 352°C.

5. A zeolitic catalyst according to claim 1 wherein the zeolite has a mole ratio of silicon oxide to aluminum oxide of from 20:1 to 35:1, from 0.10% to 0.20% of at least one Group VIII metal, wherein said zeolite has been thermally treated at a temperature of at least 352°C.

6. A zeolitic catalyst according to claim 2 wherein said zeolite has a mole ratio of silicon oxide to aluminum oxide of from 25:1 to 28:1.

7. A zeolitic catalyst according to claim 2 wherein said zeolitic catalyst comprises from 0.10% to 0.20% of at least one Group VIII metal.

8. A zeolitic catalyst according to claim 2 wherein said zeolitic catalyst is thermally treated at a temperature of at least 352°C.

9. A zeolitic catalyst according to claim 3 wherein said zeolitic catalyst comprises from 0.15% to 0.17% of at least one Group VIII metal.

10. A zeolitic catalyst according to claim 3 wherein said Group VIII metal is a mixture of palladium and platinum.

11. A zeolitic catalyst according to claim 10 wherein said palladium/platinum mixture has a palladium to platinum molar ratio of from 1:4 to 4:1.

12. A zeolitic catalyst according to claim 3 wherein said zeolitic catalyst is thermally treated at a temperature of at least 352°C.

13. A zeolitic catalyst according to claim 4 wherein said zeolitic catalyst is thermally treated at a temperature of at least 370°C.

14. A zeolitic catalyst according to claim 1 wherein said zeolite has a mole ratio of silicon oxide to aluminum oxide of from 25:1 to 28:1, from 0.15% to 0.17% of at least one Group VIII metal, wherein said zeolite has been thermally treated at a temperature of at least 352°C.

15. A catalytic dewaxing process for reducing the cloud point of a hydrocarbon oil feed comprising contacting said hydrocarbon oil feed with a catalyst according to claim 1, 2, 3, 4 or 5 under dewaxing conditions, thereby producing a dewaxed product.

16. A catalytic dewaxing process according to claim 15 wherein said dewaxing conditions include a temperature of from 200°C to 475°C, a pressure of from 15 psig to 3000 psig, a liquid hourly space velocity of from 0.1 hr-1 to 20 hr-1, and a hydrogen recycle rate from 500 SCFB to 10,000 SCFB.

17. A catalytic dewaxing process according to claim 16 wherein said dewaxing conditions include a temperature of from 250°C to 450°C, a pressure of from 150 psig to 3000 psig, and a liquid hourly space velocity of from 0.2 hr-1 to 10 hr-1.

18. A catalytic dewaxing process according to claim 17 wherein said dewaxing conditions include a temperature of from 340°C to 400°C, a pressure of from 200 psig to 3000 psig, and a liquid hourly space velocity of from 0.4 hr-1 to 2 hr-1.
